# EUROPEAN PATENT APPLICATION

(11) **EP 1 754 835 A1**
(43) Date of publication of application: **21.02.2007**
(21) Application number: 05746016.4
(22) Date of filing: 02.06.2005
(51) Int. Cl.: E02F 9/16, B60R 21/11, B62D 25/06, B62D 25/08

(54) **CANOPY INSTALLATION STRUCTURE IN WORKING VEHICLE**

(30) Priority: 09.06.2004 JP 2004170732
(71) Applicant: KOMATSU LTD., Minato-ku, Tokyo 107-8414 (JP); KOMATSU ZENOAH CO., Saitama 350-1192 (JP)
(72) Inventor: TAKANO, Yoshiyuki, Kawagoe-shi, Saitama 3501192 (JP); ENDO, Takeshi, Kawagoe-shi, Saitama 3501192 (JP)
(74) Representative: Luckhurst, Anthony Henry William
(86) International application number: PCT/JP2005/010118
(87) International publication number: WO 2005/121460

(57) **Abstract**

The invention relates to a canopy installation structure provided with strength of a ROPS in a working vehicle, and more particularly to a canopy installation structure which does not increase a counter weight even in a compact working vehicle having a comparatively light vehicle weight. Lower ends of a pair of left and right support columns (10a, 10b) supporting a roof installation plate (5a) from a lower surface side are connected and firmly attached by an installation seat plate (11). An installation bracket (3) is provided with a support column (15) and a canopy installation seat (16) in which a portion near one end is attached to the support column (15), and firmly supports and fixes the installation seat plate (11) by an installation bolt (13). The support column (15) is supported and fixed to a counter weight or the like, and the other end portion of the canopy installation seat (16) is supported and fixed by utilizing a bracket (22) attached to a rev-frame. The installation bracket (3) can be structured by a sheet metal or the like for weight saving.

## Description

### Technical Field

The present invention relates to a canopy installation structure provided with a ROPS function in a working vehicle, and more particularly to a canopy installation structure in a compact working vehicle in which a vehicle body weight is comparatively light.

### Background Art

As a working vehicle for use in a civil engineering or the like, there has been conventionally employed, for example, a vehicle equipped with a compact excavation working apparatus or the like. In these working vehicles, a demand for improving a safety for an operator is increased, and there is required an equipment of a canopy provided with an operator protecting structure called a roll-over protective structure (ROPS) for securing the safety of the operator at a time when the vehicle is inverted. Further, as the ROPS, it is required to satisfy a strength standard defined by an ISO standard or the like.

Examples of the installation structure of the canopy provided with the ROPS include a canopy installation structure in which a canopy is attached to a canopy support member of a box-shaped body structure attached to a vehicle frame (refer, for example, to a non-patent document 1), and a canopy installation structure in which a canopy is attached to a canopy installationseat integrally molded with a counter weight (refer, for example, to Japanese Patent Application No. 2003-142647filed by applicants of the present invention hereinafter referred to as a patent document 1).

The canopy installation structure disclosed in the non-patent document 1 is shown in FIG. 10 of the patent document 1 as a prior art, and is shown in FIG. 7 of the present application. As shown in FIG. 7, the installation structure is formed by attaching a ROPS canopy support member 41 having a sheet metal structure and formed in a box shape to a frame 40, and attaching a canopy 42 having a sheet metal structure onto the ROPS canopy support member 41. Accordingly, a strength defined by the ISO standard or the like is applied to the canopy 42, and the ROPS canopy is structured.

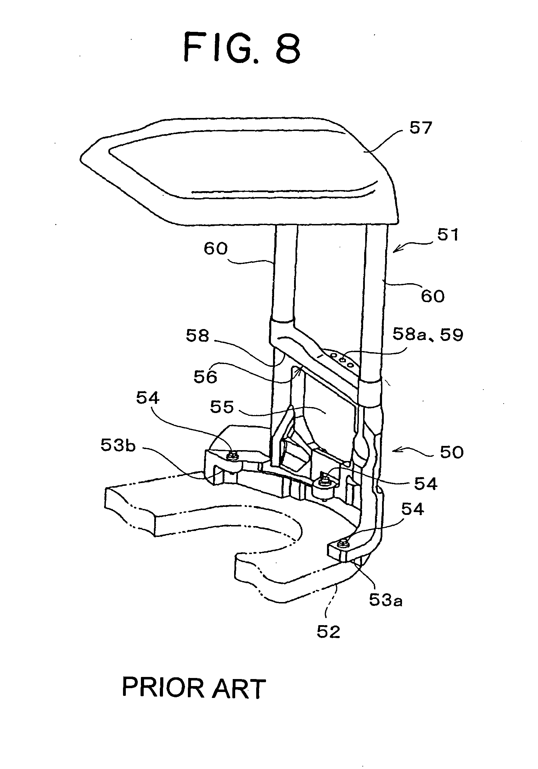

Further, in the invention in the patent document 1, an upper surface of a counter weight 50 is formed as a canopy installation seat 56 as shown in FIG. 8. A lower installation bracket 58 of a canopy 51 which supports a roof 57 by a support column 60 is mounted on the canopy installation seat 56, and a plurality of bolt holes (not shown) which communicate with a bolt hole 58a of the lower installation bracket 58 are pierced in the canopy installation seat 56. Bolts 59 are inserted between both the bolt holes, and the canopy 51 is attached and fixed onto the canopy installation seat 56 of the counter weight 50 via screwing connections of the bolts 59.

The counter weight 50 is firmly fixed to a frame 52 by a bolt 54 via lower installation seats 53a and 53b. Accordingly, the structure is made such that it is possible to sufficiently receive a force applied to the counter weight 50 and the ROPS canopy 51 attached to the canopy installation seat 56 of the counter weight 50 at a time when the vehicle is inverted.
Non-patent Document 1: Bobcat, Model56 Hydraulic Excavator Parts Manual, Melroe Company, November 1986, p, A31
Patent Document 1: Japanese Patent Application No. 2003-142647

### Disclosure of the Invention

### Problem to be Solved by the Invention

In the canopy installation structure shown in the non-patent document 1 mentioned above, the canopy support member 41 has the box-shaped sheet metal structure. For this reason, there is a problem that the structure becomes complicated for obtaining a structure securing a sufficient strength for supporting the ROPS canopy 42, a weight of the canopy support member 41 is increased, and a manufacturing cost is widely increased.

There is also a problem that a vehicle weight is increased particularly in a case of being employed for a compact working vehicle, and there is a problem that it is hard to balance the vehicle body due to an increase of the vehicle weight. Further, an engine (not shown) is mounted to a rear portion of the canopy support member 41. However, the canopy support member 41 forms an obstacle wall at a time of executing a maintenance, an inspection or the like of the engine, thereby deteriorating a workability of the maintenance, an inspection or the like of the engine. Moreover, since the canopy support member 41 is structured such that the strength is obtained on the basis of a surface structure, it is impossible to form an opening for the engine work with respect to a surface plate constructing the canopy support member 41 in the box shape.

On the other hand, in the invention in the patent document 1, the canopy installation seat 56 is molded integrally with the counter weight 50 by means of a casting. For this reason, it is possible to maintain a desired strength as the canopy installation seat 56 of the canopy 51, and it is possible to satisfy the strength standard as the ROPS defined by the ISO standard or the like. Since an inspection hole 55 is formed in a center portion of the counter weight 50, there is obtained an advantage that it is possible to easily execute a maintenance and inspection work with respect to the engine (not shown) mounted to a front portion of the counter weight 50.

However, in order to integrally cast the canopy installation seat 56 with the counter weight 50 and structure in such a manner as to satisfy the strength standard as the ROPS, it is necessary to secure a minimum thickness equal to or more than a desired thickness. Particularly, if the minimum thickness is secured so as to be equal to or more than the desired thickness in a compact working vehicle having a comparatively light vehicle weight, there is a case that the weight serving as the counter weight becomes too heavy with respect to the working vehicle.

An object of the present invention is to provide a canopy installation structure in a working vehicle provided with a strength as a ROPS without making a weight serving as a counter weight too heavy even in a compact working vehicle having a comparatively light vehicle weight, as well as improving a workability of maintenance and inspection with respect to an engine.

### Means for Solving the Problem

The above-mentioned problems can be effectively solved by a canopy installation structure provided with a ROPS function corresponding to a basic structure of the present invention. In other words, there is provided a canopy installation structure provided with a ROPS function in a working vehicle, comprising:
a canopy having a roof portion, support columns supporting the roof portion and provided in a rising manner in right and left sides, and an installation seat plate firmly attached between lower end portions of the support columns;
an installation bracket detachably supported and fixed from a lower surface side of the installation seat plate in a state in which a center of the lower surface side of the installation seat plate is open, and having at least one support column independently provided in a rising manner; and
the installation bracket being structured by a separate member from a constituting member of the working vehicle, and being supported and fixed by the constituting member of the working vehicle.

Further, in accordance with a preferable aspect of the present invention, the constituting member of the working vehicle supporting and fixing at least one support column is constituted of a counter weight or a rev-frame.

Furthermore, in the present invention, it is preferable that the installation bracket is supported and fixed by any one of a radiator bracket, an engine bracket and an exterior bracket.

### Effect of the Invention

According to the present invention, the canopy provided with the ROPS function is detachably supported and fixed by the installation bracket independently constituted as the separate member from the constituting member of the working vehicle. Further, the lower surface side of the installation seat plate is detachably supported and fixed by the installation bracket in the state in which the center in the lower surface side of the installation seat plate coupling and firmly attaching the lower end portions of the columns constituting the canopy is open.

Since the installation bracket can be independently structured as the separate member from the constituting member of the working vehicle, it is possible to structure the installation bracket by the sheet metal or the like, and the installation bracket can be structured while reducing weight of the installation bracket. Accordingly, it is possible to use the installation bracket in accordance with the present invention as the installation bracket having a sufficient strength for the canopy with respect to the working vehicle in which vehicle weight is comparatively light. It is also possible to form the sheet plate or the like constituting the installation bracket in a L-shaped cross sectional shape, a C-shaped cross sectional shape, a rectangular cross sectional shape, a triangular cross sectional shape or the like having a strength.

Accordingly, structure can be made such that the strength of the installation bracket satisfies a standard strength capable of standing against the vehicle weight at a time when the working vehicle is inverted, thereby supporting and fixing the canopy. Further, it is possible to lighten the weight of the installation bracket.

Further, since the installation seat plate has at least one support column independently provided in a rising manner, the installation seat plate can support and fix the canopy in a state in which a lower surface side center of the installation seat plate of the canopy is open. Further, an opening in the lower surface side center can be effectively functioned as an inspection port for executing the maintenance and inspection of the engine or the like.

Further, a structure of the canopy can be formed in a rectangular shape by a pair of support columns, the roof and the installation seat plate. It is possible to secure a rigidity against a twisting force applied to the canopy, an impact force applied to the canopy at a time when the working vehicle is inverted, the weight of the working vehicle and the like.

The installation bracket may be structured so as to directly support the lower surface side of the installation seat plate of the canopy by the support column or the like constituting the installation bracket, or may be structured so as to form the canopy installation seat surface-supporting the lower surface side of the installation seat plate and support via the canopy installation seat.

In a case that the canopy installation seat is provided, the structure may be made so as to support a portion near both end portions of the canopy installation seat by two support columns independently provided in a rising manner, or may be structured so as to support a portion near one end portion of the canopy installation seat by one support column and support a portion near the other end portion by utilizing the constituting member of the working vehicle. The canopy installation seat may be also used as an installation seat supporting and fixing one end portion of a floor of a control seat in the working vehicle.

In a case that a structure is made so as to directly support the lower surface side of the installation seat plate of the canopy by the support column constituting the installation bracket, the structure may be made so as to support the portion near both end portions of the installation seat plate by two support columns independently provided in a rising manner. Or, the structure may be made so as to support the portion near one end portion of the installation seat plate by one support column and support the portion near the other end portion by utilizing the constituting member of the working vehicle.

In both cases of directly supporting and fixing the installation seat plate of the canopy and supporting the installation seat plate of the canopy via the canopy installation seat surface-supporting the lower surface side of the installation seat plate, it is possible to detachably and firmly support and fix the support column constituting the installation bracket by the counter weight as described as the preferable aspect mentioned above.

Further, in a same manner, it is possible to detachably and firmly support and fix the support column aforementioned as the preferable aspect by the rev-frame constituting the working vehicle. In the case that two support columns are used as the support columns constituting the installation bracket, it is possible to detachably support and fix one support column by the counter weight, and detachably support and fix the other support column by the rev-frame.

Further, as mentioned above, it is possible to detachably and firmly support and fix the installation seat plate of the canopy by utilizing any one bracket of the radiator bracket, the engine bracket and the exterior bracket as the installation bracket. In a case of utilizing the engine bracket or the exterior bracket as the member supporting the installation seat plate of the canopy, it is possible to simplify a structure shape of the installation bracket. Further, it is possible to lighten the weight of the installation bracket.

### Brief Description of the Drawings

[FIG. 1] It is a schematic side view of a working vehicle according to an embodiment of the present invention (first embodiment).
[FIG. 2] It is an expansion perspective view showing a structure of a main portion of a canopy, an installation bracket and a bracket (first embodiment).
[FIG. 3] It is a perspective view showing an assembly of each of the members in FIG. 2 (first embodiment).
[FIG. 4] It is a perspective view showing a state of being supported and fixed to a counter weight and a rev-frame (first embodiment).
[FIG. 5] It is a perspective view of a structure to which a roof is attached (first embodiment).
[FIG. 6] It is a rear view of a canopy, an installation bracket and a counter weight (second embodiment).

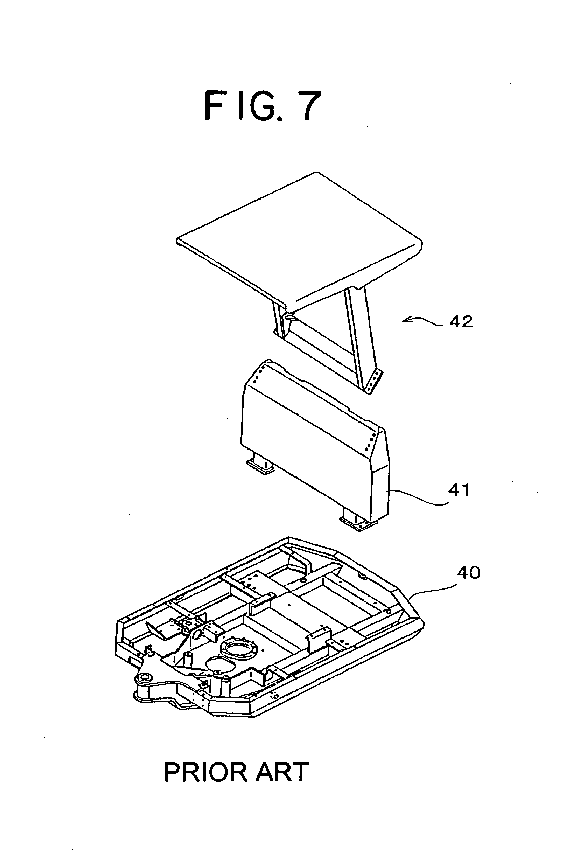

[FIG. 7] It is a perspective view of structures of a canopy, a counter weight and a frame (conventional example 1).
[FIG. 8] It is a perspective view of structures of a counter weight and a canopy (prior art).

### Description of Reference Numerals

- 1: working vehicle
- 2: counter weight
- 3: installation bracket
- 4: canopy
- 6: driver seat
- 7: traveling body
- 8: working machine
- 9: exterior cover
- 10a, b: support column
- 11: installation seat plate
- 15: support column
- 16: canopy installation seat
- 20: lower installation seat
- 22: bracket
- 25: rev-frame
- 26: radiator bracket
- 30: opening
- 40: frame
- 41: canopy support member
- 42: canopy
- 50: counter weight
- 51: canopy
- 52: frame
- 53a, b: lower installation seat
- 55: inspection hole
- 56: canopy installation seat
- 58: lower installation bracket
- 60: support column

### Best Mode for Carrying Out the Invention

A description of preferable embodiments according to the present invention will be specifically given below with reference to the accompanying drawings. As a configuration of a canopy installation structure according to the invention, it is possible to employ every shapes and layout structures as far as the shapes and the layout structures can solve the problem of the present invention, in addition to shapes and layout structures described below. Accordingly, the present invention is not limited to the embodiments described below, but can be modified variously. First Embodiment

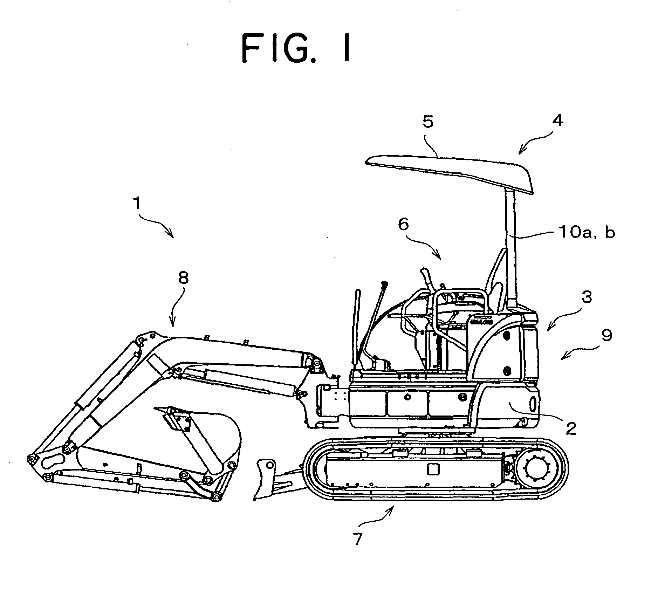

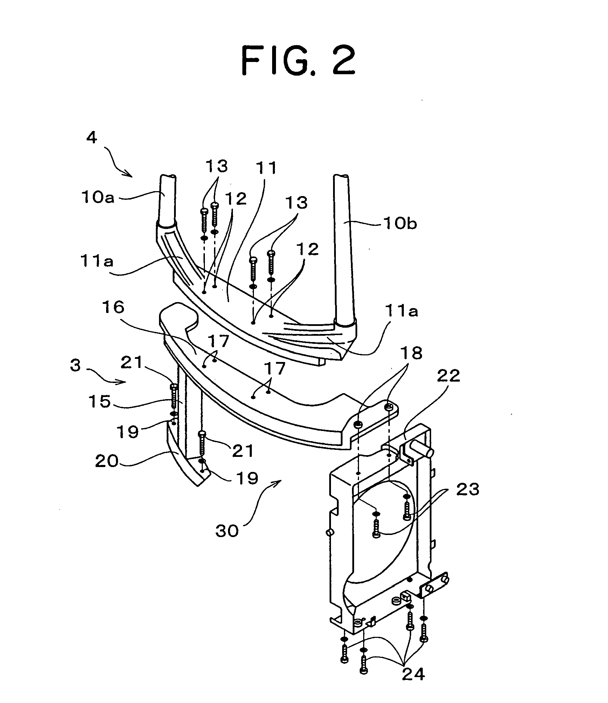

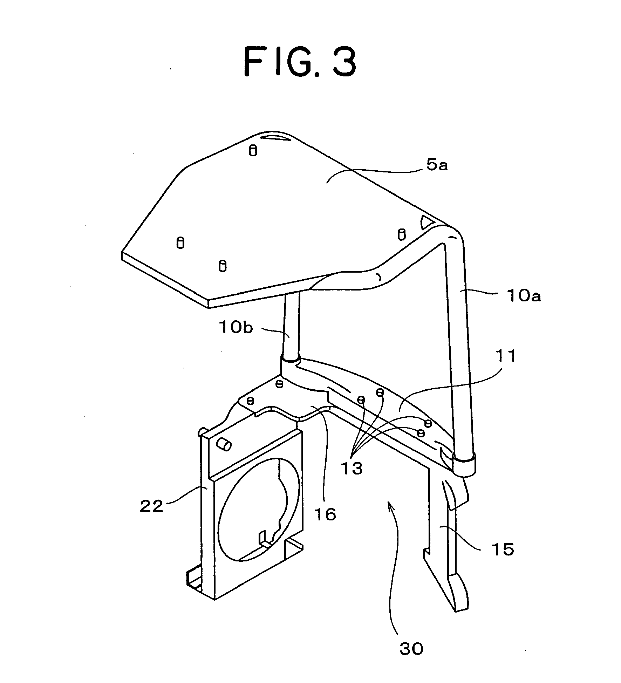

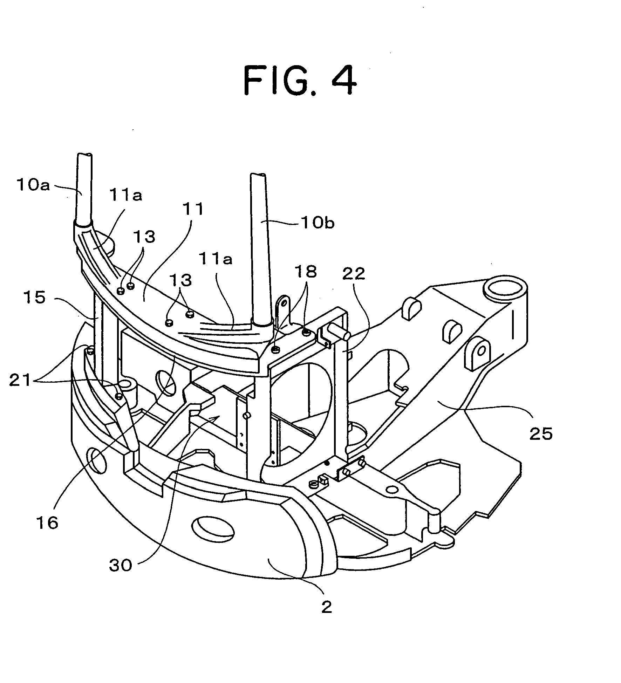

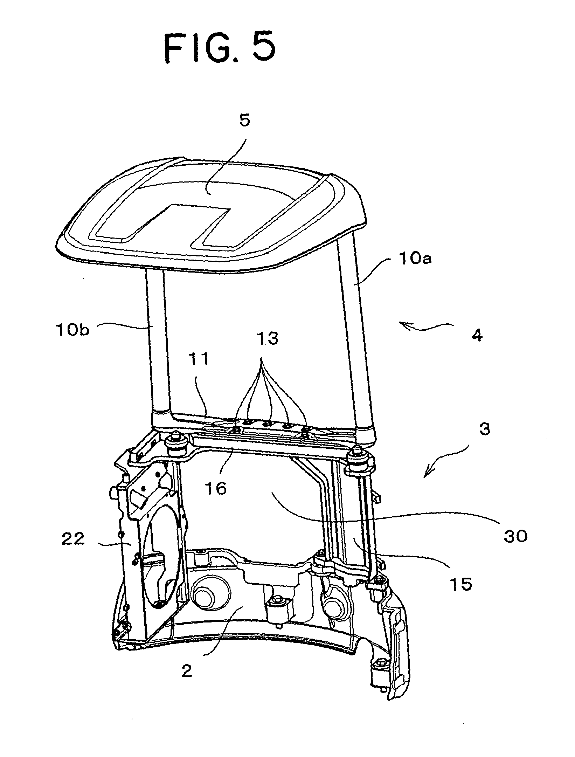

FIG. 1 is a schematic side view of a working vehicle according to an embodiment of the present invention. FIG. 2 is an expansion perspective view showing a structure of a main portion of a canopy, an installation bracket and a bracket. FIG. 3 is a perspective view showing an assembly of each of the members in FIG. 2. FIG. 4 is a perspective view showing a state in which the assembly in FIG. 3 is supported and fixed to a counter weight and a rev-frame. FIG. 5 is a perspective view showing a state in which a roof is attached.

In FIG. 1, there is shown an outer appearance of a compact excavation vehicle 1 having a comparatively light vehicle weight and corresponding to an example of a working vehicle in accordance with the present invention. A main machine constituted of a working machine 8, a driver seat 6, an engine, a counter weight 2 and the like is mounted on a pair of right and left traveling bodies 7 so as to freely swivel and rotate. A canopy 4 is provided in such a manner as to cover an upper portion, a rear portion and the like of the driver seat 6, and a structure is made such that a safety of a worker can be secured by the canopy 4 at a time when the working vehicle 1 is inverted.

In FIG. 1, since the counter weight 2 and the installation bracket 3 are accommodated within an exterior cover 9, these members are not illustrated. However, reference numerals 2 and 3 in FIG. 1 show schematic layout positions of the counter weight 2 and the installation bracket 3.

As shown in FIG. 3, the canopy 4 is supported and fixed by a pair of left and right support columns 10a and 10b in such a manner as to support a roof installation plate 5a from a lower surface side. The pair of left and right support columns 10a and 10b are bent approximately in a L shape in mid-course after supporting the roof installation plate 5a, and lower end portions of the support columns 10a and 10b are coupled and firmly attached by an installation seat plate 11. A roof 5 can be attached to the roof installation plate 5a as shown in FIG. 1.

As shown in FIG. 2, a plurality of installation holes 12 are pierced in the installation seat plate 11, and it is possible to firmly support and fix with respect to installation holes 17 of a canopy installation seat 16 in the installation bracket 3 via installation bolts 13 . Further, in order to relax a stress concentration in a coupled and firmly attached portions between the lower end portions of the pair of left and right support columns 10a and 10b and the installation seat plate 11, it is possible to form reinforcing ribs 11a or the like in the installation seat plate 11 as well as forming a shape of the coupled and firmly fixed portions in a smooth coupled shape.

The installation bracket 3 is constituted of a support column 15 and a canopy installation seat 16 in which a portion near one end portion is attached to the support column 15. The installation bracket 3 is structured by a sheet metal formed by bending a steel plate or the like, and a horizontal cross sectional shape of the support column 15 is formed approximately in a L shape. A lower installation seat 20 is formed on an opposite end portion to an end portion to which the canopy installation seat 16 is attached in the support column 15. The support column 15 can be firmly supported and fixed to the constituting member of the working vehicle 1 by installation bolts 21 via installation holes 19 formed in the lower installation seat 20.

The other end portion of the canopy installation seat 16 can be firmly supported and fixed by a bracket 22 corresponding to the constituting member of the working vehicle 1, and can be structured as shown in FIG. 3. In an illustrated embodiment, there is shown an example in which the other end portion of the canopy installation seat 16 is supported and fixed by using the bracket 22. However, as a supporting and fixing method in the other end portion of the canopy installation seat 16, a method can be executed by using a support column provided with a same structure as the support column 15 supporting and fixing one end portion side of the canopy installation seat 16, in place of using the bracket 22. As an installation method between the support column 15 and the canopy installation seat 16, a method can be executed by using a welding means or attaching and fixing via a L-shaped reinforcing piece or the like.

The support column 15 in the installation bracket 3 can be attached as shown in FIG. 4 by using the installation bolt 21 in the installation seat formed in the counter weight 2, on a basis of an assembled structure as shown in FIG. 3. The other end portion side of the canopy installation seat 16 can be attached to the bracket 22 attached to a rev-frame 25 by using installation bolts 24. In this case, in FIG. 5, there is shown a perspective view of a structure in a case of viewing an installation structure shown in FIG. 4 from a front side while omitting the rev-frame 25.

As a consequence, it is possible to form an opening 30 between a lower surface side of the canopy installation seat 16 and the counter weight 2 and between the support column 15 and the bracket 22 as shown in FIG. 5, and it is possible to use the opening 30 as a maintenance and inspection port of an engine mounted in a front surface side of the installation bracket 3.

Further, it is possible to support and fix the canopy installation seat 16 to the counter weight 2 via the support column 15, and it is possible to firmly support and fix the canopy installation seat 16 by the bracket 22 attached to the rev-frame 25. For this reason, it is possible to construct the installation bracket 3 as a rectangular block body provided with a strength, and it is possible to structure a strength of the installation bracket 3 so as to have a desired strength.

Furthermore, since the canopy 4 can be supported and fixed by the installation bracket 3 having the desired strength, it is possible to structure the canopy 4 in such a manner as to satisfy a strength standard defined by ISO standard or the like. The pair of left and right support columns 10a and 10b of the canopy 4 can be formed by bending one support column, or can be formed by respectively bending two independent support columns 10a and 10b.

At this time, the pair of left and right support columns 10a and 10b may be formed by a hollow pipe or the like, or may be formed by a solid pipe or the like. It is necessary for the pair of left and right support columns 10a and 10b to have such a strength that the support columns 10a and 10b are not bent over a level deteriorating a safety of the worker working in the driver seat, on a basis of an impact force generated at a time when the working vehicle 1 is inverted or a weight of the working vehicle 12.

In this case, since the pair of left and right support columns 10a and 10b are structured so as to be bendable to a level which does not deteriorate the safety of the worker at the driver seat, the structure can be made so as to absorb the impact applied to the canopy 4 at a time when the working vehicle is inverted.

Consequently, it is possible to simplify a structure of the installation bracket 3, and it is possible to lighten a structure weight of the installation bracket 3. Further, it is possible to set a total weight obtained by adding the weight of the installation bracket 3 and the weight of the canopy 4 to the weight of the counter weight 2 to a weight necessary for securing the safety of the working vehicle. It is also possible to obtain a desired weight with respect to the compact working vehicle having a light vehicle body weight.

Further, it is possible to disassemble the installation bracket 3 into the support column, the canopy installation seat 16 and the like, it is possible to detach the installation bracket 3 from the counter weight 2 or it is possible to execute work in a state in which the installation bracket 3 is detached from the rev-frame 25 at a time of forming a working space of an engine room. As a result, it is possible to open the working space wide.

It is possible to form an installation seat supporting and fixing a floor of the driver seat in the installation bracket 3. At this time, in a case that the floor of the driver seat is structured so as to be tiltable up, it is possible to cancel the installation bracket 3 from a supporting state of the counter weight 2 and the bracket 22 by detaching the installation structure bolts 21 and 23, and it is possible to tilt up the installation bracket 3 and the canopy 4 together with the floor of the driver seat.

Accordingly, it is possible to tilt up the floor without lifting up the counterweight together with the floor by detaching the installation bolt so as to cancel a supported and fixed state by the counter weight 2 or the like, at a time of tilting up the floor of the driver seat, and a tilt-up force can be set to a reduced force. Further, it is possible to enlarge a working space after being tilted up. Second Embodiment

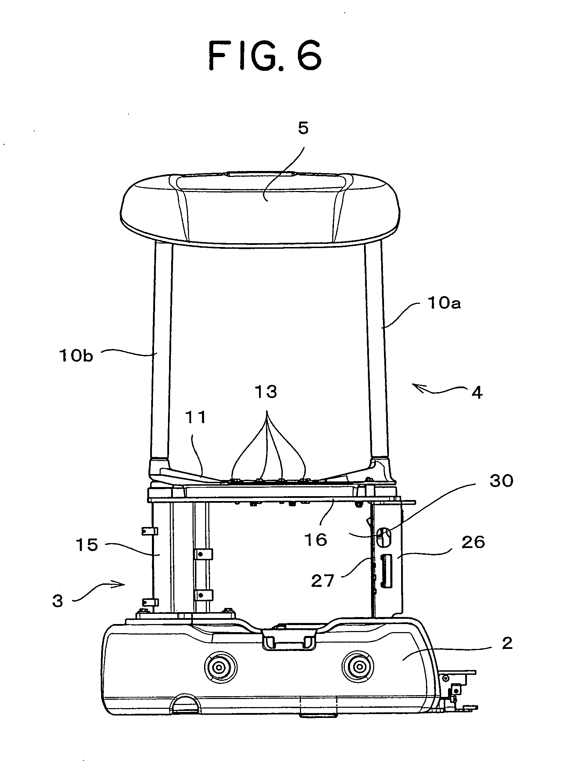

FIG. 6 shows a rear view corresponding to an assembly structural view of the canopy 4, the installation bracket 3 and the counter weight 2 showing a second embodiment of the present invention. In the second embodiment, the same reference numerals as the reference numerals used in the first embodiment are attached to the same structures as those of the first embodiment. Descriptions of the same members as those of the first embodiment will be omitted by using the same reference numerals. Further, the same effects as those described in the first embodiment can be achieved in the second embodiment.

In the first embodiment, the description of the structure in which the canopy installation seat 16 is supported by the support column 15 and the bracket 22 attached to the rev-frame 25 is given. However, in the second embodiment, the structure is made such that the canopy installation seat is supported and fixed by using a radiator bracket 26 in place of using the bracket 22 attached to the rev-frame 25. Other structures are same as the structures in the first embodiment.

It is possible to arrange the installation bracket 3 without moving a layout position of the radiator bracket 26 by using the radiator bracket 26 in common as a support member of the canopy installation seat 16, and it is possible to increase a freedom with respect to the layout position of the installation bracket 3. In a case of reinforcing the strength as the radiator bracket 26, it is possible to increase the strength of supporting and fixing the canopy installation seat 16 by attaching a reinforcing member 27 constituted of a sheet member or the like to the radiator bracket 26.

It is possible to use an opening formable between the radiator bracket 26 and the support column 15 and between the canopy installation seat 16 and the counter weight 2 as an inspection port for inspecting and maintaining the engine or the like. In this case, an engine bracket, an exterior bracket or the like can be utilized in place of utilizing the radiator bracket 26.

In the first and second embodiments mentioned above, there are shown the embodiments in which the support column 15 in the installation bracket 3 is supported and fixed by the counter weight 2. However, the support column 15 can be supported and fixed to the rev-frame 25 or the like in place of being supported and fixed to the counter weight 2.

Further, in the first and second embodiments, the description of the embodiments in which the canopy installation seat 16 is used is given. However, the present invention can be structured such that the installation seat plate 11 of the canopy 4 is directly supported and fixed by the support column 15, the bracket 22, the radiator bracket 26, the engine bracket, the exterior bracket or the like without using the canopy installation seat.

### Industrial Applicability

In the present invention, it is possible to apply a technical idea of the present invention to apparatuses to which the technical idea of the present invention can be applied.

## Claims

1. A canopy installation structure provided with a ROPS function in a working vehicle, comprising:
the canopy having a roof portion, support columns supporting the roof portion and provided in a rising manner in right and left sides, and an installation seat plate firmly attached between lower end portions of the support columns; and
an installation bracket detachably supported and fixed from a lower surface side of the installation seat plate in a state in which a center of the lower surface side of said installation seat plate is open, and having at least one support column independently provided in a rising manner, wherein
the installation bracket is structured by a separate member from a constituting member of the working vehicle and is supported and fixed by the constituting member of the working vehicle.

2. The canopy installation structure according to claim 1, wherein the constituting member of the working vehicle supporting and fixing the at least one support column is constituted of a counter weight.

3. The canopy installation structure according to claim 1 or 2, wherein the constituting member of the working vehicle supporting and fixing the at least one support column is constituted of a rev-frame.

4. The canopy installation structure according to any one of claims 1 to 3, wherein the installation bracket is supported and fixed by any one of a radiator bracket, an engine bracket and an exterior bracket.
